# EUROPEAN PATENT APPLICATION

(11) **EP 4 475 264 A1**
(43) Date of publication of application: **11.12.2024**
(21) Application number: 23749606.2
(22) Date of filing: 25.01.2023
(51) Int. Cl.: H01M 10/0585, H01M 6/18, H01M 10/0562

(54) **BATTERY**

(30) Priority: 01.02.2022 JP 2022014272
(71) Applicant: Maxell, Ltd., Kyoto 618-8525 (JP)
(72) Inventor: SEKIYA, Tomohito, Otokuni-gun, Kyoto 618-8525 (JP); KATAYAMA, Hideaki, Otokuni-gun, Kyoto 618-8525 (JP); KAMIZORI, Haruki, Otokuni-gun, Kyoto 618-8525 (JP)
(74) Representative: Diehl & Partner
(86) International application number: PCT/JP2023/002191
(87) International publication number: WO 2023/149290

(57) **Abstract**

It is possible to provide a battery having a favorable output property. The battery according to the present invention relates to Goals 3, 7, 11, and 12 of the SDGs. The battery according to the present invention includes a stacked electrode body having a positive electrode, a negative electrode, and a plurality of solid electrolyte layers that are adjacent to each other across the positive electrode or the negative electrode, in which the solid electrolyte layers that are adjacent to each other across the positive electrode or the negative electrode are bonded to each other at at least portions of their ends. The solid electrolyte layers that are adjacent to each other across the positive electrode or the negative electrode are bonded to each other at a portion having a length of 50% or more of the entire peripheral length of the solid electrolyte layers.

## Description

### Technical Field

The present invention relates to a battery having a favorable output property.

### Background Art

In recent years, the development of portable electronic devices such as cellular phones or laptop computers, the practical use of electric vehicles, and the like have led to the need for compact and lightweight batteries that have a high capacity and a high energy density.

Currently, lithium-ion secondary batteries, in which an organic electrolyte solution containing an organic solvent and a lithium salt is used, are especially widely used as secondary batteries that can meet this demand. On the other hand, following further development of devices, there is a demand for lithium-ion secondary batteries having an increased lifespan and a higher capacity, and a high degree of reliability is also required for the batteries.

However, because the organic electrolyte solution used in lithium-ion secondary batteries contains an organic solvent, which is a flammable substance, the organic electrolyte solution may abnormally generate heat or the battery may catch fire when an abnormal situation such as a short circuit occurs in the battery.

Under these circumstances, lithium secondary batteries not using organic solvents have been gaining attention. Such a battery includes, instead of a conventional organic solvent-based electrolyte and a separator interposed between a positive electrode and a negative electrode, a molded body (a solid electrolyte layer) made of a solid electrolyte in which no organic solvent is used, for example, and is very safe even in a high-temperature environment (Patent Document 1 and the like).

Batteries in which solid electrolytes are used are not only very safe but also highly reliable and highly environmentally resistant, and have an increased lifespan. Therefore, it is anticipated that such batteries will become maintenance-free batteries that can continue to contribute to the development of society, as well as to safety and security. Providing such batteries to society will contribute to reaching the following goals of the 17 Sustainable Development Goals (SDGs) established by the United Nations: Goal 3 (to ensure healthy lives and promote well-being for all people of all ages), Goal 7 (to ensure access for all people to affordable, reliable, sustainable and modern energy), Goal 11 (to achieve inclusive, safe, resilient and sustainable cities and human settlements), and Goal 12 (to ensure sustainable production and consumption patterns).

It also has been proposed to use a stack of multiple stacked bodies each of which being constituted by stacking a positive electrode, a solid electrolyte layer, and a negative electrode, in batteries using solid electrolytes (Patent Document 2).

### Prior Art Documents

### Patent Document

[Patent Document 1] WO 2020/054081
[Patent Document 2] WO 2021/075208

### Disclosure of Invention

### Problem to be Solved by the Invention

Incidentally, in a battery having an electrode body in which a solid electrolyte layer is interposed between a positive electrode and a negative electrode, there is no medium through which lithium ions can move, such as an organic electrolyte solution-based electrolyte. Thus, if an electrode such as the positive electrode or the negative electrode is not in intimate contact with the solid electrolyte layer, movement of lithium ions between the electrode and the solid electrolyte layer will not favorably proceed, and for example, an output property of the battery (discharge property under high load) will be likely to deteriorate.

The present invention was made in view of the above-described circumstances, and aims to provide a battery having a favorable output property.

### Means for Solving Problem

A battery according to the present invention includes a stacked electrode body having a positive electrode, a negative electrode, and a plurality of solid electrolyte layers that are adjacent to each other across the positive electrode or the negative electrode, in which the solid electrolyte layers that are adjacent to each other across the positive electrode or the negative electrode are bonded to each other at at least portions of their ends.

### Effects of the Invention

According to the present invention, it is possible to provide a battery having a favorable output property.

### Brief Description of Drawings

[FIG. 1] FIG. 1 is a plan view schematically showing an example of a battery according to the present invention.
[FIG. 2] FIG. 2 is a cross-sectional view taken along line I-I in FIG. 1.

### Description of the Invention

A battery according to the present invention includes a stacked electrode body having a positive electrode, a negative electrode, and a plurality of solid electrolyte layers that are adjacent to each other across the positive electrode or the negative electrode. Also, in the stacked electrode body, solid electrolyte layers that are adjacent to each other across the positive electrode or the negative electrode are bonded to each other at at least portions of their ends.

This makes it possible to suppress deterioration of adhesion among the positive electrode, the negative electrode, and the solid electrolyte layers disposed to be in contact with these electrodes during a battery production process and use of the battery. Thus, in the battery according to the present invention, it is possible to maintain favorable mobility of lithium ions between the positive electrode and the solid electrolyte layer and between the negative electrode and the solid electrolyte layer, thus enabling the battery to exhibit a favorable output property.

Note that the term 'bonding'' of ends of the solid electrolyte layers as used herein indicates that the solid electrolyte layers are tightly adhered to each other at the bonded portion to such an extent that they do not peel off during, for example, ordinary use of the battery.

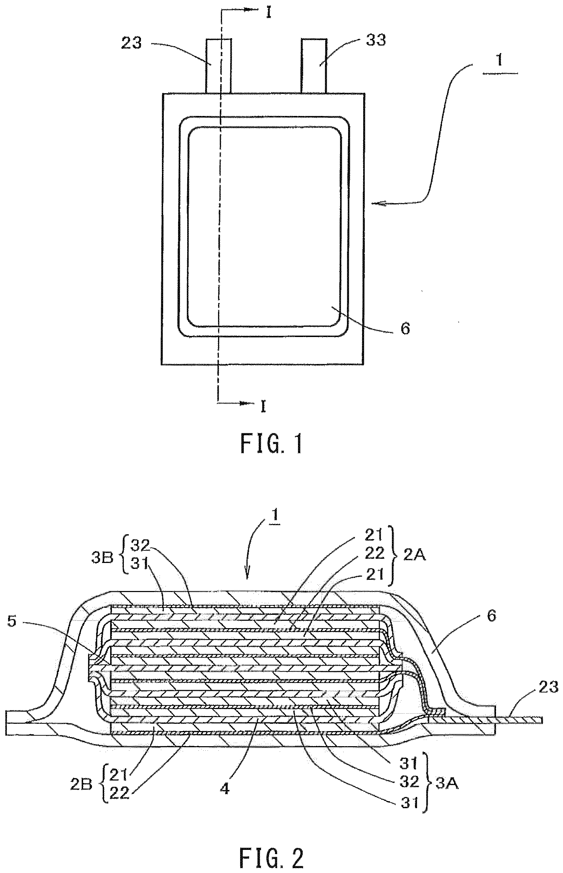

FIGS. 1 and 2 schematically show an example of a battery according to the present invention. FIG. 1 is a plan view of the battery, and FIG. 2 is a cross-sectional view taken along line I-I in FIG. 1.

A battery 1 shown in FIGS. 1 and 2 has a stacked electrode body 5 in which two positive electrodes 2A each of which having positive electrode mixture layers 21 on both surfaces of a current collector 22 and two negative electrodes 3A each of which having negative electrode mixture layers 31 on both surfaces of a current collector 32 are provided, the positive electrodes 2A and the negative electrodes 3Aare stacked in an alternating manner with a solid electrolyte layer 4 being interposed therebetween, and a positive electrode 2B having a positive electrode mixture layer 21 on one surface of a current collector 22 is stacked on the lower side of the negative electrode 3A arranged on the lower side in the figure with the solid electrolyte layer 4 being interposed therebetween, and a negative electrode 3B having a negative electrode mixture layer 31 on one surface of a current collector 32 is stacked on the upper side of the positive electrode 2A arranged on the upper side in the figure with the solid electrolyte layer 4 being interposed therebetween. Also, the battery 1 has a configuration in which the stacked electrode body 5 is housed in a laminate-film exterior body 6 constituted by two metal laminate films. Note that layers of the metal laminate films that constitute the laminate-film exterior body 6 are not shown in FIG. 2.

The current collectors 22 of the positive electrodes 2A and 2B have exposed portions where the positive electrode mixture layer 21 is not formed, and these exposed portions are collectively connected as lead bodies to a positive electrode external terminal 23. Although not shown, the current collectors of the negative electrodes 3A and 3B of the stacked electrode body also have exposed portions where the negative electrode mixture layer is not formed, and these exposed portions are collectively connected as lead bodies to a negative electrode external terminal 33 in the battery 1. Also, one end of the positive electrode external terminal 23 and one end of the negative electrode external terminal 33 are drawn out of the laminate-film exterior body 6 so as to enable connection to external devices and the like.

Also, in the stacked electrode body 5, the solid electrolyte layers 4 that are adjacent to each other across the positive electrode 2A or the negative electrode 3A are bonded to each other at at least portions of their ends, that is, left ends in FIG. 2. Note that regarding the right ends of the solid electrolyte layers 4 in FIG. 2, since the current collectors 22, which function as lead bodies of the positive electrodes 2A, are connected to the positive electrode external terminal 23, it is not possible to bond adjacent solid electrolyte layers 4 to each other in portions where the current collectors 22 extend.

In this manner, in the stacked electrode body of the battery, solid electrolyte layers that are adjacent to each other across the positive electrode or the negative electrode are bonded at at least portions of their ends, thereby making it possible to maintain favorable adhesion between the positive electrode and the solid electrolyte layer and between the negative electrode and the solid electrolyte layer in the stacked electrode body, thus enhancing an output property of the battery. Note that, from the viewpoint of ensuring such effects more satisfactorily, a region where the solid electrolyte layers that are adjacent to each other across the positive electrode or the negative electrode are bonded together is a portion having a length of preferably 50% or more, more preferably 75% or more, and even more preferably 90% or more, of the entire peripheral length of the solid electrolyte layers. Also, the ends of the solid electrolyte layers that are adjacent to each other across the positive electrode or the negative electrode are preferably bonded together in their entirety, except for the portions where the current collectors (lead bodies) connected to the electrode external terminals are disposed.

Also, from the viewpoint of further increasing bonding strength between the solid electrolyte layers, the width of the portion where the solid electrolyte layers are bonded (the length of the portion where the solid electrolyte layers are bonded in a direction inward from edges of the solid electrolyte layers (the horizontal direction in FIG. 2)) is preferably 0.5 mm or more, and more preferably 1.0 mm or more.

The battery according to the present invention includes primary batteries and secondary batteries.

### <Positive electrode>

A positive electrode having a structure in which a positive electrode mixture layer containing a positive electrode active material and a solid electrolyte is formed on one surface or both surfaces of a current collector, for example, can be used as the positive electrode of the battery.

In a case where the battery is a primary battery, it is possible to use the same positive electrode active material that is used in conventionally known nonaqueous electrolyte primary batteries. Specifically, examples thereof include manganese dioxide; lithium-containing manganese oxide (e.g., LiMn₃O₆, composite oxides, which have the same crystal structure (β-type structure, γ-type structure, or a structure in which β-type and γ-type are mixed) as manganese dioxide, and in which the Li content is 3.5% by mass or less, preferably 2% by mass or less, more preferably 1.5% by mass or less, and particularly preferably 1% by mass or less, or the like); lithium-containing composite oxides such as LiₐTi_{5/3}O₄ (4/3≤a<7/3); vanadium oxide; niobium oxide; titanium oxide; sulfides such as iron disulfide; graphite fluoride; silver sulfides such as Ag₂S; and nickel oxides such as NiO₂.

Also, in a case where the battery is a secondary battery, it is possible to use the same active material as the positive electrode active material that is used in conventionally known nonaqueous electrolyte secondary batteries, that is, an active material capable of occluding and releasing Li (lithium) ions. Specific examples of the positive electrode active material include spinel-type lithium manganese composite oxides represented by Li₁-ₓMᵣMn₂₋ᵣO₄ (where M is at least one element selected from the group consisting of Li, Na, K, B, Mg, Ca, Sr, Ba, Ti, V, Cr, Zr, Fe, Co, Ni, Cu, Zn, Al, Sn, Sb, In, Nb, Ta, Mo, W, Y, Ru, and Rh, and x and r satisfy 0≤x≤1 and 0≤r≤1), layered compounds represented by LiᵣMn₍₁₋ₛ₋ₜ₎NiₛMtO₍₂₋ᵤ₎Fᵥ (where M is at least one element selected from the group consisting of Co, Mg, Al, B, Ti, V, Cr, Fe, Cu, Zn, Zr, Mo, Sn, Ca, Sr, and W, and r, s, t, u, and v satisfy 0≤r≤1.2, 0<s<0.5, 0≤t≤0.5, u+v<1, -0.1≤u≤0.2, and 0≤v≤0.1), lithium cobalt composite oxides represented by Li₁₋ₓCo₁₋ᵣMᵣO₂ (where M is at least one element selected from the group consisting of Al, Mg, Ti, V, Cr, Zr, Fe, Ni, Cu, Zn, Ga, Ge, Nb, Mo, Sn, Sb, and Ba, and x and r satisfy 0≤x≤1 and 0≤r≤0.5), lithium nickel composite oxides represented by Li₁₋ₓNi₁₋ᵣMᵣO₂ (where M is at least one element selected from the group consisting of Al, Mg, Ti, Zr, Fe, Co, Cu, Zn, Ga, Ge, Nb, Mo, Sn, Sb, and Ba, and x and r satisfy 0≤x≤1 and 0≤r≤0.5), olivine-type composite oxides represented by Li₁₊ₛ₋ₓM₁₋ᵣNᵣPO₄Fₛ (where M is at least one element selected from the group consisting of Fe, Mn, and Co, N is at least one element selected from the group consisting ofAl, Mg, Ti, Zr, Ni, Cu, Zn, Ga, Ge, Nb, Mo, Sn, Sb, V, and Ba, and x, r, and s satisfy 0≤x≤1, 0≤r≤0.5, 0≤s≤1), and pyrophosphate compounds represented by Li₂₋ₓM₁₋ᵣNᵣP₂O₇ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, V, and Ba, and x and r satisfy 0≤x≤2 and 0≤r≤0.5). These compounds may be used alone or in a combination of two or more.

In a case where the battery is a secondary battery, the average particle size of the positive electrode active material is preferably 1 µm or more, more preferably 2 µm or more, and preferably 10 µm or less, and more preferably 8 µm or less. Note that the positive electrode active material may be primary particles or secondary particles obtained through aggregation of primary particles. When a positive electrode active material having an average particle size in the above range is used, a large interface with the solid electrolyte contained in the positive electrode can be obtained, thus enhancing output properties of the battery.

The average particle size of the positive electrode active material particles used in this specification and other particles (a negative electrode active material, a solid electrolyte, or the like) refers to the value of the 50% diameter (D₅₀) in a volume-based integrated fraction when the integrated volume is calculated from particles with a small particle size, using a particle size distribution measuring device (Microtrac particle size analyzer "HRA9320" manufactured by Nikkiso Co., Ltd., etc.).

In a case where the battery is a secondary battery, it is preferable that the positive electrode active material includes, on its surface, a reaction suppressing layer for suppressing a reaction between the positive electrode active material and the solid electrolyte contained in the positive electrode.

If the positive electrode active material comes into direct contact with the solid electrolyte in the positive electrode mixture layer, there is a risk that the solid electrolyte will be oxidized and a resistive layer will be formed, which will lead to a reduction in lithium-ion conductivity in the positive electrode mixture layer. It is possible to suppress a reduction in lithium-ion conductivity in the positive electrode mixture layer due to oxidation of the solid electrolyte by providing the reaction suppressing layer for suppressing a reaction with the solid electrolyte on the surface of the positive electrode active material to prevent direct contact between the positive electrode active material and the solid electrolyte.

The reaction suppressing layer is only required to be made of a material that has lithium-ion conductivity and can suppress a reaction between the positive electrode active material and the solid electrolyte. Examples of materials that can constitute the reaction suppressing layer include oxides that include Li and at least one element selected from the group consisting of Nb, P, B, Si, Ge, Ti, and Zr, or more specifically, Nb-containing oxides such as LiNbOs, and Li₃PO₄, Li₃BO₃, Li₄SiO₄, Li₄GeO₄, LiTiO₃, LiZrO₃, and Li₂WO₄. The reaction suppressing layer may contain only one of these oxides, two or more of these oxides, or a composite compound formed by two or more of these oxides. Among these oxides, Nb-containing oxides are preferably used, and LiNbOs is more preferably used.

Preferably, 0.1 to 1.0 part by mass of the reaction suppressing layer is present on the surface of the positive electrode active material relative to 100 parts by mass of the positive electrode active material. When the amount of the reaction suppressing layer is within this range, it is possible to favorably suppress a reaction between the positive electrode active material and the solid electrolyte.

The reaction suppressing layer can be formed on the surface of the positive electrode active material using a sol-gel method, a mechano-fusion method, a CVD method, a PVD method, an ALD method, or the like.

The content of the positive electrode active material in the positive electrode mixture layer is preferably 60% by mass to 98% by mass.

It is possible to add a conductive assistant to the positive electrode mixture layer. Specific examples thereof include carbon materials such as graphite (natural graphite, artificial graphite), graphene, carbon black, carbon nanofibers, and carbon nanotubes. Note that, for example, in a case where Ag₂S is used as an active material, conductive Ag is generated during the discharge reaction, and thus a conductive assistant does not need to be added. In a case where a conductive assistant is added to a positive electrode mixture layer, the content of the conductive assistant is preferably 1% by mass to 10% by mass.

Also, it is possible to add a binder to the positive electrode mixture layer. Specific examples thereof include fluoropolymer such as polyvinylidene difluoride (PVDF), and acrylic resins. Note that, for example, in a case where favorable moldability can be ensured when the positive electrode mixture layer is formed without using a binder as in the case where a sulfide-based solid electrolyte is added to the positive electrode mixture layer (details will be described later), a binder does not need to be added to the positive electrode mixture layer.

In a case where a binder is required in the positive electrode mixture layer, the binder content is preferably 15% by mass or less, and preferably 0.5% by mass or more. On the other hand, in a case where the positive electrode mixture layer contains a sulfide-based solid electrolyte, a preferable binder content is 0.1% by mass or more and 15% by mass or less, and a more preferable binder content is 0.5% by mass or more and 5% by mass or less.

There is no particular limitation on the solid electrolyte contained in the positive electrode mixture layer as long as the solid electrolyte has lithium-ion conductivity, and for example, sulfide-based solid electrolytes, hydride-based solid electrolytes, halide-based solid electrolytes, oxide-based solid electrolytes, and the like can be used.

Examples of the sulfide-based solid electrolytes include particles of Li₂S-P₂S₅-based glass, Li₂S-SiS₂-based glass, Li₂S-P₂S₅-GeS₂-based glass, Li₂S-B₂S₃-based glass, or the like. In addition, it is possible to use thio-LISICON-type sulfide-based solid electrolytes (Li_{12-12a-b+c+6d-e}M¹_{3+a-b-c-d}M²_{b}M³_{c}M⁴_{d}M⁵₁₂₋ₑXₑ (where M¹ represents Si, Ge, or Sn, M² represents P or V, M³ represents Al, Ga, Y, or Sb, M⁴ represents Zn, Ca, or Ba, M⁵ represents S, or S and O, X represents F, Cl, Br, or I, and a, b, c, d, and e satisfy 0≤a<3, 0≤b+c+d≤3, and 0≤e≤3), such as Li₁₀GeP₂S₁₂ and Li_{9.54}Si_{1.74}P_{1.44}S_{11.7}Cl_{0.3}), and argyrodite-type sulfide-based solid electrolytes (Li_{7-f+g}PS₆₋ₓCl_{x+y} (where f and g satisfy 0.05≤f≤0.9, and -3.0f+1.8≤g≤-3.0f+5.7), such as Li₆PS₅Cl), and Li₇₋ₕPS₆₋ₕClᵢBrⱼ (where h, i, and j satisfy h=i+j, 0<h≤1.8, and 0.1≤i/j≤10.0), which have attracted attention in recent years due to their high lithium-ion conductivity.

Examples of the hydride-based solid electrolytes include LiBH₄, and solid solutions of LiBH₄ and a following alkali metal compound (e.g., solid solutions in which the mole ratio between LiBH₄ and the alkali metal compound is 1:1 to 20:1). At least one selected from the group consisting of lithium halides (e.g., LiI, LiBr, LiF, and LiCl), rubidium halides (e.g., RbI, RbBr, RbF, and RbCl), cesium halides (e.g., CsI, CsBr, CsF, and CsCl), lithium amides, rubidium amides, and cesium amides can be used as the alkali metal compound in the above-mentioned solid solution.

Examples of the halide-based solid electrolytes include monoclinic LiAlCL, defect spinel or layered LiInBr₄, and monoclinic Li₆₋₃ₘYₘX₆ (where m satisfies 0<m<2 and X=Cl or Br), and it is possible to use known solid electrolytes disclosed in WO 2020/070958 and WO 2020/070955, and the like.

Examples of the oxide-based solid electrolytes include garnet-type Li₇La₃Zr₂O₁₂, NASICON-type Li_{1+O}Al_{1+O}Ti_{2-O}(PO₄)₃ and Li₁₊ₚAl₁₊ₚGe₂₋ₚ(PO₄)₃, and perovskite-type Li_{3q}La_{2/3-q}TiO₃.

The solid electrolytes listed above may be used alone or in a combination of two or more. Among these solid electrolytes, sulfide-based solid electrolytes are preferable because sulfide-based solid electrolytes have high lithium-ion conductivity, sulfide-based solid electrolytes containing Li and P are more preferable, and in particular, argyrodite-type sulfide-based solid electrolytes that have high lithium-ion conductivity and high chemical stability are even more preferable.

The content of the solid electrolyte in the positive electrode mixture layer is preferably 4% by mass to 40% by mass.

It is possible to use, as the current collector of the positive electrode, foils, punched metals, nets, expanded metals, and foamed metals that are made of a metal such as aluminum or stainless steel; and carbon sheets.

The positive electrode can be produced using a method for applying a positive electrode mixture-containing composition (paste, slurry, or the like) obtained by dispersing, in a solvent, the positive electrode active material and the solid electrolyte, and a conductive assistant, a binder, and the like that are to be added as needed, to the current collector, drying the composition, and then performing compression molding such as calendaring as needed, to form a positive electrode mixture layer on the surface of the current collector.

Water or an organic solvent such as N-methyl-2-pyrrolidone (NMP) can be used as the solvent in the positive electrode mixture-containing composition. However, when a solid electrolyte that is highly reactive to water is used, it is desirable to select a solvent that is less likely to deteriorate the solid electrolyte. In particular, the sulfide-based solid electrolytes and the hydride-based solid electrolytes cause chemical reactions with a minute amount of water, and therefore, it is preferable to use non-polar aprotic solvents such as hydrocarbon solvents including hexane, heptane, octane, nonane, decane, decaline, toluene, and xylene. In particular, it is more preferable to use a super dehydrated solvent in which the water content is reduced to 0.001% by mass (10 ppm) or less. It is also possible to use fluorine-based solvents such as "VERTREL (registered trademark)" manufactured by Du Pont-Mitsui Fluorochemicals Co., Ltd., "ZEORORA (registered trademark)" manufactured by Zeon Corporation, and "NOVEC (registered trademark)" manufactured by Sumitomo 3M Limited, and nonaqueous organic solvents such as dichloromethane and diethyl ether.

Further, when a conductive porous substrate such as a punched metal is used for the positive electrode current collector, for example, the positive electrode can also be produced by filling the pores of the conductive porous substrate with the positive electrode mixture-containing composition, drying the composition, and performing compression molding such as calendaring as needed.

The thickness of the positive electrode mixture layer (when a current collector is provided, the thickness per side of the current collector) is preferably 10 to 1000 µm. Further, the thickness of the positive electrode current collector is preferably 0.01 to 0.1 mm.

Also, in a case where a conductive porous substrate is used for a positive electrode current collector and a positive electrode is produced using a method for filling pores of the conductive porous substrate with the positive electrode mixture-containing composition, the thickness of the positive electrode is preferably 30 to 4000 µm.

A lead body of the positive electrode may be formed by, for example, providing an exposed portion on a part of the positive electrode current collector where the positive electrode mixture layer is not formed and cutting the exposed portion to a predetermined shape, or may be formed by bonding an aluminum or nickel foil (plate) to the exposed portion of the current collector. When forming a battery, for example, the lead body of the positive electrode is connected to a positive electrode external terminal (e.g., the positive electrode external terminal 23 in the case of a sheet-shaped battery shown in FIGS. 1 and 2, and a sealing can or an exterior can in the case of a later-described flat battery) of the battery. Also, when forming a stacked electrode body having a plurality of positive electrodes, the lead bodies of all of the positive electrodes that constitute the stacked electrode body are welded together to form a single body, for example, and when forming a battery using such a stacked electrode body, the single lead body or some of the current collectors of the positive electrodes that constitute the stacked electrode body are connected to the positive electrode external terminal of the battery.

### <Negative electrode>

A negative electrode having a structure in which a negative electrode mixture layer containing a negative electrode active material is formed on one surface or both surfaces of a current collector, or a negative electrode having a lithium sheet or a lithium alloy sheet can be used as the negative electrode of the battery.

In a case where the negative electrode has a negative electrode mixture layer, examples of the negative electrode active material thereof include carbon materials such as graphite, simple substances and compounds (such as oxides) that contain elements such as Si or Sn, and alloys thereof. It is also possible to use, as negative electrode active materials, lithium metal and lithium alloys (lithium-aluminum alloy, lithium-indium alloy, and the like).

The content of the negative electrode active material in the negative electrode mixture layer is preferably 10% by mass to 99% by mass.

It is possible to add a conductive assistant to the negative electrode mixture layer. Specific examples thereof include conductive assistants that are the same as those listed above to be added to the positive electrode mixture layer. The content of the conductive assistant in the negative electrode mixture is preferably 1% by mass to 10% by mass.

Also, it is possible to add a binder to the negative electrode mixture layer. Specific examples thereof include binders that are the same as those listed above to be added to the positive electrode mixture layer. Note that, for example, in a case where favorable moldability can be ensured when the negative electrode mixture layer is formed without using a binder as in the case where a sulfide-based solid electrolyte is added to the negative electrode mixture layer (described later), a binder does not need to be added to the negative electrode mixture layer.

In a case where a binder is required in the negative electrode mixture layer, the binder content is preferably 15% by mass or less, and preferably 0.5% by mass or more. On the other hand, in a case where the negative electrode mixture layer contains a sulfide-based solid electrolyte, a preferable binder content is 0.3% by mass or more and 15% by mass or less, and a more preferable binder content is 0.7% by mass or more and 7% by mass or less.

In the case of the negative electrode having the negative electrode mixture layer, a solid electrolyte is added to the negative electrode mixture layer. Specific examples thereof include solid electrolytes that are the same as the solid electrolytes listed above that can be used in the positive electrode mixture layer. Among the solid electrolytes listed above, it is more preferable to use sulfide-based solid electrolytes because they have high lithium-ion conductivity and also functions for improving the moldability of the negative electrode mixture layer.

The content of the solid electrolyte in the negative electrode mixture layer is preferably 4% by mass to 49% by mass.

It is possible to use, as the negative electrode current collector, foils, punched metals, nets, expanded metals, and foamed metals that are made of a metal such as copper or nickel; and carbon sheets.

The negative electrode can be produced using a method for, for example, applying a negative electrode mixture-containing composition (paste, slurry, or the like) obtained by dispersing, in a solvent, the negative electrode active material, and a conductive assistant, a solid electrolyte, a binder, and the like that are to be added as needed, to the current collector, drying the composition, and then performing compression molding such as calendaring as needed, to form a negative electrode mixture layer on the surface of the current collector.

Water or an organic solvent such as NMP can be used as the solvent in the negative electrode mixture-containing composition. However, when a solid electrolyte is also added to the negative electrode mixture-containing composition, it is desirable to select a solvent that is less likely to deteriorate the solid electrolyte, and it is preferable to use any of the above-listed various examples of solvents for the positive electrode mixture-containing composition.

Further, when a conductive porous substrate such as a punched metal is used for the negative electrode current collector, for example, the negative electrode can be produced by filling the pores of the conductive porous substrate with the negative electrode mixture-containing composition, drying the composition, and performing compression molding such as calendaring as needed.

The thickness of the negative electrode mixture layer (when a current collector is provided, the thickness per side of the current collector) is preferably 10 to 1000 µm. Further, the thickness of the negative electrode current collector is preferably 0.01 to 0.1 mm.

Also, in a case where a conductive porous substrate is used for a negative electrode current collector and a negative electrode is produced using a method for filling pores of the conductive porous substrate with the negative electrode mixture-containing composition, the thickness of the negative electrode is preferably 30 to 4000 µm.

In a case where a negative electrode has a lithium sheet or a lithium alloy sheet, sheets constituted only by lithium sheets or lithium alloy sheets, or sheets obtained by bonding these sheets to current collectors are used.

Examples of alloying elements for lithium alloys include aluminum, lead, bismuth, indium, and gallium, and aluminum and indium are preferable. The percentage of alloying elements in a lithium alloy (in a case where the lithium alloy contains a plurality of types of alloying elements, the total percentage of these alloying elements) is preferably 50 atomic% or less (in this case, the remaining portion is lithium and inevitable impurities).

Also, in a case where a negative electrode has a sheet made of a lithium alloy, a stacked body is prepared by stacking layers that contain an alloying element for forming a lithium alloy on the surface of a lithium layer (a layer containing lithium) constituted by a lithium metal foil or the like through press-bonding, for example, and the negative electrode can be prepared by forming a lithium alloy on the surface of the lithium layer by bringing the stacked body into contact with a solid electrolyte in a battery. In the case of such a negative electrode, a stacked body having a layer containing an alloying element on only one surface of the lithium layer may be used, or a stacked body having a layer containing an alloying element on both surfaces of the lithium layer may also be used. The stacked body can be formed, for example, by press-bonding a lithium metal foil and a foil made of an alloying element to each other.

Further, a current collector can also be used when a lithium alloy is formed in a battery to form a negative electrode. For example, a stacked body having a lithium layer on one surface of a negative electrode current collector and a layer containing an alloying element on a surface of the lithium layer opposite to the negative electrode current collector may be used, or a stacked body having lithium layers on both surfaces of the negative electrode current collector and a layer containing an alloying element on a surface of each lithium layer opposite to the negative electrode current collector may be used. The negative electrode current collector and the lithium layer (lithium metal foil) may be stacked on each other through press-bonding or the like.

It is possible to use, for example, a foil made of these alloying elements or the like, for the layer containing the alloying element of the stacked body used as a negative electrode. The thickness of the layer containing the alloying element is preferably 1 µm or more, more preferably 3 µm or more, preferably 20 µm or less, and more preferably 12 µm or less.

It is possible to use, for example, a lithium metal foil or the like for the lithium layer according to the stacked body used as a negative electrode. The lithium layer preferably has a thickness of 0.1 to 1.5 mm. Further, the sheet according to the negative electrode having a lithium sheet or a lithium alloy sheet also preferably has a thickness of 0.1 to 1.5 mm.

In a case where the negative electrode having a lithium sheet or a lithium alloy sheet has a current collector, it is possible to use, for the current collector, the same current collector as those listed above that can be used for a negative electrode having a negative electrode mixture layer.

A lead body of the negative electrode may be formed by, for example, providing an exposed portion on a part of the negative electrode current collector where the negative electrode active material layer (the negative electrode mixture layer or a layer formed by a metal sheet, which is a negative electrode active material. The same applies to the following.) is not formed and cutting the exposed portion to a predetermined shape, or may be formed by bonding a copper or nickel foil (plate) to the exposed portion of the current collector. When forming a battery, for example, the lead body of the negative electrode is connected to a negative electrode external terminal (e.g., the negative electrode external terminal 33 in the case of the sheet-shaped battery shown in FIGS. 1 and 2, and a sealing can or an exterior can in the case of a later-described flat battery) of the battery. Also, when forming a stacked electrode body having a plurality of negative electrodes, the lead bodies of all of the negative electrodes that constitute the stacked electrode body are welded together to form a single body, for example, and when forming a battery using such a stacked electrode body, the single lead body or some of the current collectors of the negative electrodes that constitute the stacked electrode body are connected to the negative electrode external terminal of the battery.

### <Solid electrolyte layer>

It is possible to use, for the solid electrolyte in the solid electrolyte layer, one, or two or more types of solid electrolytes that are the same as the solid electrolytes of the positive electrode listed above, and from the viewpoint of favorably bonding solid electrolyte layers that are adjacent to each other across the positive electrode or the negative electrode, it is preferable to use sulfide-based solid electrolytes.

Also, from the viewpoint of favorably bonding solid electrolyte layers that are adjacent to each other across the positive electrode or the negative electrode, it is preferable to add a binder to the solid electrolyte layer. The binder to be added to the solid electrolyte layer is desirably a binder that does not react with the solid electrolyte, and at least one resin selected from the group consisting of butyl rubber, chloroprene rubber, acrylic resin, and fluoropolymer is preferably used.

The solid electrolyte layer can be formed by applying a composition for forming a solid electrolyte layer that is prepared by dispersing a solid electrolyte in a solvent, to a substrate, the positive electrode, or the negative electrode, drying the composition, and performing compression molding such as pressing processing as needed.

It is desirable to select, as a solvent used for a composition for forming a solid electrolyte layer, a solvent that is less likely to deteriorate a solid electrolyte, and it is preferable to use any of the above-listed various examples of solvents for the positive electrode mixture-containing composition.

Also, from the viewpoint of further increasing strength of a solid electrolyte layer, and favorably suppressing formation of a defect such as a crack even when bonding together solid electrolyte layers that are adjacent to each other across the positive electrode or the negative electrode, the solid electrolyte layers preferably include a porous substrate.

The solid electrolyte layer containing a porous substrate contains the porous substrate and a solid electrolyte, and can be constituted using a solid electrolyte sheet having a structure in which the solid electrolyte is retained in pores of the porous substrate. Also, it is preferable that the solid electrolyte sheet has a configuration in which the solid electrolyte is retained in pores of the porous substrate and both surfaces of the porous substrate are covered with the solid electrolyte.

The porous substrate according to the solid electrolyte sheet may be preferably made of a fibrous article, such as woven fabric, nonwoven fabric, or mesh, with nonwoven fabric being particularly preferable.

The fiber diameter of a fibrous article that constitutes the porous substrate is preferably 5 µm or less, and preferably 0.5 µm or more.

There is no particular limitation on the material of the fibrous article as long as it does not react with lithium metal and has insulating properties. It is possible to use resins such as polyolefins (e.g., polypropylene and polyethylene); polystyrene; aramid; polyamideimide; polyimide; nylon; polyesters such as polyethylene terephthalate (PET); polyarylate; cellulose and modified cellulose, and the like. Further, inorganic materials such as glass, alumina, silica, and zirconia may also be used. A preferable material is polyarylate. The fibrous article may be made of one or two or more of the materials listed above. Further, the porous substrate may be constituted by only fibrous articles made of the same material, or may be constituted by fibrous articles made of two or more different materials.

The weight per area of the porous substrate is preferably 10 g/m² or less, and more preferably 8 g/m² or less such that a sufficient amount of solid electrolyte can be retained to ensure favorable lithium-ion conductivity, and is preferably 3 g/m² or more, and more preferably 4 g/m² or more from the viewpoint of ensuring sufficient strength.

The solid electrolyte contained in the solid electrolyte sheet is preferably in the form of particles with an average particle size of preferably 5 µm or less and more preferably 2 µm or less, from the viewpoint of further improving the ability to fill the pores of the porous substrate, and ensuring favorable lithium-ion conductivity. Note that, if the solid electrolyte particles are too small, there is a risk that handleability will deteriorate. Also, as will be described later, the solid electrolyte particles are preferably bound using a binder in order to favorably retain the particles in the pores of the porous substrate or to make the particles adhere well to the surface of the porous substrate. However, depending on the case, a large amount of binder may be required and the resistance value may increase. Therefore, the average particle size of the solid electrolyte particles is preferably 0.3 µm or more, and more preferably 0.5 µm or more.

It is preferable to bind the solid electrolyte using a binder in order to increase the shape retention of the solid electrolyte sheet by more favorably binding solid electrolyte layers that are adjacent to each other across the positive electrode or the negative electrode, favorably retaining the solid electrolyte in pores of the porous substrate, or improving the adhesion of the solid electrolyte covering the surface of the porous substrate to the porous substrate in the solid electrolyte sheet.

It is possible to use, as a binder in the solid electrolyte sheet, the same binder as those listed above that can be added to the solid electrode layer.

The percentage of the porous substrate to the solid electrolyte sheet (the percentage of actual volume excluding the pores) is preferably 30% by volume or less, and more preferably 25% by volume or less, from the viewpoint of ensuring favorable lithium-ion conductivity. Note that, when the percentage of the porous substrate to the solid electrolyte sheet is too small, the effect of improving the shape retention of the solid electrolyte sheet may deteriorate. Therefore, from the viewpoint of further increasing the strength of the solid electrolyte sheet, the percentage of the porous substrate to the solid electrolyte sheet is preferably 5% by volume or more, and more preferably 10% by volume or more.

Also, from the viewpoint of more favorable bonding of the solid electrolyte layers to each other and further improving the shape retention of the solid electrolyte sheet, the content of the binder in the solid electrolyte sheet is preferably 0.5% by mass or more and more preferably 1% by mass or more with respect to the total amount of the solid electrolyte and the binder. Also, from the viewpoint of limiting the amount of binder to some extent and suppressing deterioration in lithium-ion conductivity, the content of the binder in the solid electrolyte sheet is preferably 10% by mass or less, and more preferably 7% by mass or less.

Although there is no particular limitation on a method for producing a solid electrolyte sheet, it is preferable to produce a solid electrolyte sheet using a method including a step of forming a slurry or the like by dispersing, in a solvent, the solid electrolyte and a binder used as needed, and forming a slurry coating film on the surface of the porous substrate while filling pores of the porous substrate with the slurry in a wet process. This increases the strength of the solid electrolyte sheet, and facilitates the production of solid electrolyte sheets having a large area.

A coating method such as a screen printing method, a doctor blade method, or an immersion method can be adopted as a method for forming the slurry coating film on the surface of the porous substrate while filling the pores of the porous substrate with a slurry containing a solid electrolyte.

The slurry is prepared by introducing the solid electrolyte, and a binder as needed, into a solvent, and mixing the resulting mixture. It is desirable to select a slurry solvent that is less likely to deteriorate a solid electrolyte, and it is preferable to use any of the above-listed various examples of solvents for the positive electrode mixture-containing composition.

The solid electrolyte sheet can be obtained by filling the pores of the porous substrate with the slurry as described above, forming a slurry coating film on the surface of the porous substrate, then removing the slurry solvent through drying as needed, and preferably performing compression molding.

Note that, as described above, the method for producing the solid electrolyte sheet is not limited to the above wet process. For example, when pores of the porous substrate are filled with a solid electrolyte (and a binder used as needed), the pores may be filled with the solid electrolyte or a mixture of the solid electrolyte and a binder in a dry process, and compression molding may be performed. Also, in a case where the surface of the porous substrate is covered with the solid electrolyte, a sheet obtained by molding a mixture of the solid electrolyte and the binder may be attached to the surface of a sheet obtained by filling pores of the porous substrate with the solid electrolyte.

The thickness of the solid electrolyte layer that contains no porous substrate is preferably 100 to 300 µm.

Also, the thickness of the solid electrolyte layer (the solid electrolyte sheet used to form the solid electrolyte layer) containing the porous substrate is preferably 5 µm or more, more preferably 10 µm or more, preferably 50 µm or less, and more preferably 30 µm or less. Further, the thickness of the porous substrate is preferably 3 µm or more, more preferably 8 µm or more, preferably 45 µm or less, and more preferably 25 µm or less.

### <Stacked electrode body>

A stacked electrode body may be constituted using (a) one positive electrode and one negative electrode, (b) one positive electrode and two negative electrodes, (c) two positive electrodes and one negative electrode, or (d) a plurality of positive electrodes and a plurality of negative electrodes.

A solid electrolyte layer is interposed between a positive electrode and a negative electrode in the stacked electrode body in any of the forms (a), (b), (c), and (d) above. Therefore, in the stacked electrode body in the form (a), one solid electrolyte layer is interposed between the positive electrode and the negative electrode, and a solid electrolyte layer is also disposed on the outer surface of the positive electrode of this stacked electrode body (a surface opposite to the surface facing the negative electrode) and/or the outer surface of the negative electrode (a surface opposite to the surface facing the positive electrode). Thus, the stacked electrode body in the form (a) has two or three solid electrolyte layers.

In the stacked electrode body in the form (b), negative electrodes are disposed on both surfaces of the positive electrode across a solid electrolyte layer. Also, in the stacked electrode body in the form (c), positive electrodes are disposed on both surfaces of the negative electrode across a solid electrolyte layer. Thus, the stacked electrode body in the form (b) and the stacked electrode body in the form (c) have at least two solid electrolyte layers.

The stacked electrode body in the form (d) is formed by, for example, stacking a plurality of positive electrodes and a plurality of negative electrodes in an alternating manner, with a solid electrolyte layer being interposed therebetween. Similarly to the stacked electrode body in the form (a), in the stacked electrode bodies in the forms (b), (c), and (d), a solid electrolyte layer can be disposed on outer surface of one or both of the electrodes located at the outermost portion of each stacked electrode body.

Thus, in the stacked electrode bodies in the forms (b), (c), and (d), at least some of the plurality of solid electrolyte layers are interposed between the positive electrode and the negative electrode. Specifically, when a solid electrolyte is not disposed on the outer surface of one or both of the electrodes located at the outermost portion of the stacked electrode body, all of the plurality of solid electrolyte layers of the stacked electrode body are each interposed between the positive electrode and the negative electrode, whereas when a solid electrolyte is disposed on the outer surface of one or both of the electrodes located at the outermost portion of the stacked electrode body, only some of the plurality of solid electrolyte layers of the stacked electrode body are interposed between the positive electrode and the negative electrode.

Also, in any one of the stacked electrode bodies in the forms (a), (b), (c), and (d), solid electrolyte layers that are adjacent to each other across the positive electrode or the negative electrode are bonded to each other at their ends.

Note that, in the case of a stacked electrode body in the form (a) or in any one of the forms (b), (c), and (d) in which a solid electrolyte layer is disposed on the outer surface of the outermost electrode, the outermost solid electrolyte layer of the stacked electrode body is bonded at its end to the solid electrolyte layer disposed on the inner side thereof, and thus the positional displacement of the electrodes within the stacked electrode body can be favorably prevented, thus improving handleability, and impact resistance is also improved due to the function of the outermost solid electrolyte layer of the stacked electrode body.

Because an end of a solid electrolyte layer is bonded to an end of an adjacent solid electrolyte layer, the solid electrolyte layers protrude from the electrodes (the positive electrode and the negative electrode) in a plan view of the stacked electrode body (e.g., when viewed downward from the upper side in FIG. 2). In a plan view, the length of a portion of the solid electrolyte layer that protrudes from the electrodes is, due to a relationship in which the end of the solid electrolyte layer is bonded to an end of a solid electrolyte layer disposed adjacent thereto across the positive electrode or the negative electrode, desirably longer than the thickness of the positive electrode or the negative electrode disposed between these solid electrolyte layers, and specifically, the length of the protruding portion is preferably 0.5 mm or more. There is no particular limitation on the upper limit of the length of the portion of the solid electrolyte layer protruding from the electrodes in a plan view. However, if the length of the protruding portion is excessively long, the size of the exterior body needs to be increased, and thus the length of the protruding portion is usually 2.0 mm or less.

The positive electrode in the stacked electrode body in the form (c) and a positive electrode in the stacked electrode body in the form (d) in which one or both of the outermost electrodes are positive electrodes may be a positive electrode having a positive electrode mixture layer on one surface of the current collector as shown in FIG. 2, or may be a positive electrode having a positive electrode mixture layer on both surfaces of a current collector. Also, the negative electrode in the stacked electrode body in the form (b) and a negative electrode in the stacked electrode body in the form (d) in which one or both of the outermost electrodes are negative electrodes may be a negative electrode having a negative electrode active material layer on one surface of the current collector as shown in FIG. 2, or may be a negative electrode having a negative electrode active material layer on both surfaces of a current collector.

Further, a positive electrode having a positive electrode mixture layer on both surfaces of the current collector, or a positive electrode having a positive electrode mixture layer on one surface of the current collector may be used for the positive electrode disposed on any portion of the stacked electrode body other than the outermost portion. Further, a negative electrode having a negative electrode active material layer on both surfaces of the current collector, or a negative electrode having a negative electrode active material layer on one surface of the current collector may be used for the negative electrode disposed on any portion of the stacked electrode body other than the outermost portion. When a positive electrode having a positive electrode mixture layer on one surface of a current collector is used and a negative electrode having a negative electrode active material layer on one surface of a current collector is used, for example, a stacked electrode body can be formed by stacking a plurality of unit electrode bodies, each of which is formed by stacking the positive electrode and the negative electrode such that the positive electrode mixture layer and the negative electrode active material layer face each other across a solid electrolyte layer, with a solid electrolyte layer being interposed between unit electrode bodies.

The number of positive electrodes and the number of negative electrodes in the stacked electrode body in the form (d) are not particularly limited as long as the number of positive electrodes and the number of positive electrodes are each a plural number, i.e., two or more, and are usually 100 or less.

The solid electrolyte layers in the stacked electrode body may be bonded together by press-bonding (press-bonding at room temperature or thermal bonding) ends of the solid electrolyte layers, thermally welding ends of the solid electrolyte layers together, or may be bonded using an adhesive. Note that when forming a stacked electrode body, it is desired that compression molding is performed in a state in which all of the layers (the positive electrode, the negative electrode, and the solid electrolyte layer) are stacked on each other, and ends of the solid electrolyte layers are preferably bonded to each other at the same time as compression molding of the entire stacked electrode body.

When bonding ends of the solid electrolyte layers to each other simultaneously with compression molding of the stacked electrode body, it is preferable to use a hydrostatic pressing method.

Compression molding can be performed on the stacked electrode body using a hydrostatic pressing method by enclosing the stacked electrode body in a packaging material, sealing it, and using a known hydrostatic press. It is sufficient that conditions for the hydrostatic press may be, for example, a temperature of 20°C to 90°C and a pressure of 100 to 500 MPa.

### <Form of Battery>

There is no particular limitation on the form of batteries, and a battery can take various forms such as being flat (including coin and button shapes), and being tubular (cylindrical forms, quadrangular forms (rectangular cylindrical forms)), in addition to having a sheet-shape (laminate shape) having a laminate-film exterior body as shown in FIGS. 1 and 2. It is possible to use, as the exterior body (a battery case) in which the stacked electrode body is housed, a metal laminate film, or a metal can (an exterior can) having an opening combined with a lid (a sealing can).

Specifically, a sheet-shaped (laminated) battery can be produced by stacking two metal laminate films or folding one metal laminate film, and then sealing the resulting stack with their peripheries bonded together. Aflat-shaped (coin-shaped, button-shaped, or the like) battery or a tubular battery can be produced by crimping an exterior can and a sealing can to each other via a gasket and sealing the crimped cans, or by welding together and sealing an exterior can and a sealing can.

Note that, in a case where an exterior body having a form for crimping and sealing is used, polypropylene (PP), nylon, or the like can be used as the material of the gasket interposed between the exterior can and the sealing can. In addition, when a high degree of heat resistance is required according to the application of a battery, heat-resistant resins whose melting point or pyrolysis temperature is 200°C or higher, such as fluoropolymers (e.g., tetrafluoroethylene-perfluoroalkoxyethylene copolymers (PFA)); polyphenylene ether (PEE); polysulfone (PSF); polyarylate (PAR); polyethersulfone (PES); polyphenylene sulfide (PPS); and polyether ether ketone (PEEK); can also be used. Further, when a battery is used for an application where heat resistance is required, a glass hermetic seal can also be used to seal the battery.

The shape of the exterior body in a plan view may be a circular or polygonal shape such as quadrilateral shape (square or rectangle). Also, in the case of a polygonal battery, the corners may be curved.

### Examples

Hereinafter, the present invention will be described in detail based on examples. However, the examples below do not limit the present invention.

### Example 1

### <Production of solid electrolyte sheet>

A uniform slurry was prepared by mixing, using xylene ("super dehydrated" grade) as a solvent, sulfide-based solid electrolyte (Li₆PS₅Cl) particles having an average particle size of 1 µm, an acrylic resin binder, and a dispersant in a mass ratio of 100:3:1 to a solid content percentage of 40%, and stirring the mixture for 10 minutes using a thinky mixer. The slurry was then applied to the PET nonwoven fabric by passing a PET nonwoven fabric ("05TH-8" manufactured by Hirose Paper MFG. Co., Ltd.) having a thickness of 15 µm and a basis weight of 8 g/m² through the slurry and pulling the nonwoven fabric up using an applicator through a 40-µm gap, and the nonwoven fabric was dried in a vacuum at 120°C for 1 hour to obtain a solid electrolyte sheet. The percentage of the binder in the total amount of the solid electrolyte particles and the binder in the solid electrolyte sheet was 2.9% by mass. The obtained solid electrolyte sheet was cut to a size of 55×55 mm, and the resulting sheet was used for assembling a battery, which will be described later.

### <Production of positive electrode>

A uniform slurry was prepared by mixing, using xylene ("super dehydrated" grade) as a solvent, LiNi_{0.6}Co_{0.2}Mn_{0.2}O₂ particles having an average particle size of 3 µm and an amorphous composite oxide of Li and Nb formed on their surfaces, sulfide-based solid electrolyte (Li₆PS₅Cl), carbon nanotubes ("VGCF' (trade name) manufactured by Showa Denko K.K.) serving as a conductive assistant, and an acrylic resin binder in a mass ratio of 70:24:3:3 to a solid content percentage of 60%, and stirring the mixture for 10 minutes using a thinky mixer. The slurry was applied onto an Al foil with a thickness of 20 µm using an applicator with a gap of 200 µm, and drying was carried out in a vacuum at 120°C to obtain a positive electrode having a positive electrode mixture layer on one surface of the current collector. Note that, when the slurry was applied onto the Al foil serving as a current collector, an exposed portion of the Al foil was left to be used as a lead body. Then, the positive electrode was cut to a shape having a 50×50 mm main body portion on which the positive electrode mixture layer was formed, and a 10×20 mm lead body (the exposed portion of the current collector), and thus a positive electrode for a battery was obtained.

### <Production of negative electrode>

A uniform slurry was prepared by mixing, using xylene ("super dehydrated" grade) as a solvent, graphite particles having an average particle size of 20 µm, sulfide-based solid electrolyte (Li₆PS₅Cl), carbon nanotubes ("VGCF' (trade name) manufactured by Showa Denko K.K.) serving as a conductive assistant, and an acrylic resin binder in a mass ratio of 50:44:3:3 to a solid content percentage of 50%, and stirring the mixture for 10 minutes using a thinky mixer. The slurry was applied onto a SUS foil with a thickness of 20 µm using an applicator with a gap of 160 µm, and drying was carried out in a vacuum at 120°C to obtain a negative electrode having a negative electrode mixture layer on one surface of the current collector. Note that, when the slurry was applied onto the SUS foil serving as a current collector, an exposed portion of the SUS foil was left to be used as a lead body. Then, the negative electrode was cut to a shape having a 52×52 mm main body portion on which the negative electrode mixture layer was formed, and a 10×20 mm lead body (the exposed portion of the current collector), and thus a negative electrode for a battery was obtained.

### <Assembly of battery>

The positive electrode and the negative electrode were stacked such that the positive electrode mixture layer and the negative electrode mixture layer face each other across the solid electrolyte sheet, and pressurization treatment was performed thereon to form four unit electrode bodies. The four unit electrode bodies were stacked with the solid electrolyte sheet being interposed therebetween, placed in an aluminum laminate film bag, and the bag was sealed and subjected to hydrostatic pressing under the conditions that the temperature was 25°C and the pressure was 300 MPa. The stacked body obtained after hydrostatic pressing was removed from the bag, and all of the lead bodies of the positive electrodes were welded together to an aluminum plate (size: 5×70 mm, thickness: 0.3 mm), which would serve as a positive electrode external terminal, and all of the lead bodies of the negative electrodes were welded together to a nickel plate (size: 5×70 mm, thickness: 0.3 mm), which would serve as a negative electrode external terminal, to obtain a stacked electrode body. In the obtained stacked electrode body, each solid electrolyte layer was bonded at their ends to the solid electrolyte layer adjacent thereto across a positive electrode or a negative electrode, except for the portions where the lead bodies were located, and the length of the bonded portion was 91% of the entire peripheral length of the solid electrolyte layer. Also, the width of the bonded portion of the solid electrolyte layer was 1 to 2 mm from the edge of the solid electrolyte layer.

Two rectangular aluminum laminate films were prepared, the stacked electrode body was placed on one of the aluminum laminate films such that one end of the positive electrode external terminal and one end of the negative electrode external terminal protruded outward, and the other aluminum laminate film was placed thereon. Then, the ends of the four sides of one aluminum laminate film and the ends of the four sides of the other aluminum laminate film were thermally welded together, to obtain a battery (all-solid-state secondary battery) in which the stacked electrode body was housed in the laminate-film exterior body.

### Example 2

A battery (all-solid-state secondary battery) was produced in the same manner as in Example 1, except that the solid electrolyte sheet was cut to a size of 54.5×54.5 mm and used. The length of the portion bonded to the adjacent solid electrolyte layer was 79% of the entire peripheral length of the solid electrolyte layer. Also, the width of the portion bonded to the solid electrolyte layer was 0.7 to 1.6 mm from the end of the solid electrolyte layer.

### Example 3

A battery (all-solid-state secondary battery) was produced in the same manner as in Example 1, except that the solid electrolyte sheet was cut to a size of 54×54 mm and used. The length of the portion bonded to the adjacent solid electrolyte layer was 58% of the entire peripheral length of the solid electrolyte layer. Also, the width of the bonded portion of the solid electrolyte layer was 0.5 to 1.2 mm from the end of the solid electrolyte layer.

### Comparative Example 1

A battery (all-solid-state secondary battery) was produced in the same manner as in Example 1, except that hydrostatic pressing was not performed on a stacked body obtained by stacking four unit electrode bodies, each of which having a positive electrode, a solid electrolyte layer, and a negative electrode.

Each of the batteries of Examples 1 to 3 and Comparative Example 1 was charged to a voltage of 4.2 V with a constant current at a current value of 0.05 C, subsequently charged with a voltage of 4.2 V until the current value reached 0.01 C, discharged at a current value of 0.1 C until the voltage reached 2.0 V, and then discharge capacity (0.1 C discharge capacity) was measured.

Also, each of the batteries after 0.1 C discharge capacity was measured was charged with a constant current and charged with a constant voltage under the same conditions as in the 0.1 C discharge capacity measurement, discharged at a current value of 5 C until the voltage reached 2.0 V, and then discharge capacity (5 C discharge capacity) was measured. Then, the capacity retention ratio of each battery was determined by dividing the 5 C discharge capacity by 0.1 C discharge capacity and expressing the obtained value using a percentage, and output properties of the batteries were evaluated. The results of the evaluations are shown in Table 1.

**Table 1**

| | Output Property Capacity retention ratio (%) |
|---|---|
| Example 1 | 36 |
| Example 2 | 35 |
| Example 3 | 33 |
| Comparative Example 1 | 26 |

As shown in Table 1, the batteries of Examples 1 to 3 having stacked electrode bodies, in which each solid electrolyte layer was bonded at its end to the solid electrolyte layer adjacent thereto across the positive electrode or the negative electrode, had a higher capacity retention ratio at the time of output property evaluation and more favorable output properties, compared to the battery of Comparative Example 1 using the stacked electrode body in which each solid electrolyte layer was not bonded to the other solid electrolyte layer.

The invention may be embodied in other forms without departing from the essential characteristics thereof. The embodiments disclosed in this application are to be considered in all respects as illustrative and not limiting. The scope of the present invention should be construed in view of the appended claims, rather than the foregoing description, and all changes that come within the meaning and range of equivalency of the claims are intended to be embraced therein.

### Industrial Applicability

A battery according to the present invention can be applied to the same applications as conventionally known primary batteries and secondary batteries, but the battery has great heat resistance because it has a solid electrolyte instead of an organic electrolyte solution. Therefore, the battery according to the present invention can be preferably used in applications in which the battery is exposed to high temperatures.

### Description of Reference Numerals

- 1: Battery
- 2A, 2B: Positive electrode
- 21: Positive electrode mixture layer
- 22: Positive electrode current collector
- 23: Positive electrode external terminal
- 3A, 3B: Negative electrode
- 31: Negative electrode mixture layer
- 32: Negative electrode current collector
- 33: Negative electrode external terminal
- 4: Solid electrolyte layer
- 5: Stacked electrode body
- 6: Laminate-film exterior body

## Claims

1. A battery comprising,
a stacked electrode body having a positive electrode, a negative electrode, and a plurality of solid electrolyte layers that are adjacent to each other across the positive electrode or the negative electrode,
wherein the solid electrolyte layers that are adjacent to each other across the positive electrode or the negative electrode are bonded to each other at at least portions of ends of the solid electrolyte layers.

2. The battery according to claim 1,
wherein the solid electrolyte layers contain a binder.

3. The battery according to claim 1,
wherein the solid electrolyte layers contain a sulfide-based solid electrolyte.

4. The battery according to claim 1,
wherein the solid electrolyte layers that are adjacent to each other across the positive electrode or the negative electrode are bonded to each other at a portion having a length of 50% or more of the entire peripheral length of the solid electrolyte layers.

5. The battery according to claim 1,
wherein the solid electrolyte layers that are adjacent to each other across the positive electrode or the negative electrode are bonded to each other at a portion having a length of 75% or more of the entire peripheral length of the solid electrolyte layers.

6. The battery according to claim 1,
wherein the solid electrolyte layers that are adjacent to each other across the positive electrode or the negative electrode are bonded to each other at a portion having a length of 90% or more of the entire peripheral length of the solid electrolyte layers.

7. The battery according to claim 1, comprising:
a plurality of the positive electrodes; and
a plurality of the negative electrodes,
wherein at least one of the plurality of solid electrolyte layers is interposed between a positive electrode and a negative electrode among the plurality of positive electrodes and the plurality of negative electrodes.
